# EUROPEAN PATENT SPECIFICATION

(11) **EP 0 533 847 B1**
(45) Date of publication and mention of the grant of the patent: **15.09.1999**
(21) Application number: 91915075.5
(22) Date of filing: 17.06.1991
(51) Int. Cl.: G02B 6/26, G02B 6/255, G02B 6/38, G02B 6/42

(54) **MINIATURE FIBEROPTIC BEND DEVICE AND METHOD**
MINIATUR FASEROPTISCHE BIEGE-VORRICHTUNG UND METHODE
DISPOSITIF ET PROCEDE PERMETTANT D'OBTENIR UNE COURBURE DE FIBRE OPTIQUE MINIATURE

(30) Priority: 15.06.1990 US 539010
(43) Date of publication of application: 31.03.1993
(73) Proprietor: Thomas & Betts International, Inc., Sparks, Nevada 89431 (US)
(72) Inventor: STOWE, David, W., Medfield, MA 02052 (US); FITZGERALD, Paul, W., Southbridge, MA 01559 (US); GILLHAM, Frederick, J., Westboro, MA 01581 (US)
(74) Representative: Deans, Michael John Percy
(86) International application number: PCT/US91/04322
(87) International publication number: WO 91/20007

(56) References cited:
- EP-A- 301 840
- WO-A-90/00261
- DE-A- 3 034 873
- DE-A- 3 326 406
- FR-A- 2 426 920
- US-A- 4 315 666
- US-A- 4 482 203
- US-A- 4 493 528
- US-A- 4 595 251
- US-A- 4 906 068
- US-A- 5 011 251
- SZARKA et al., "A Review of Biconical Taper Couplers, Fiber and Integrated Optics", Vol. 3, Nos. 2-3, pp. 285-297, see pg. 286 and Fig. 1.

## Description

The invention relates to a family of new fibre routing devices.

We explain below how to provide bends in optical fibres with no substantial loss of optical power and without fracturing the fibre or affecting its longevity. We also explain how to package electro-optical and fibre optic components in greatly reduced package volumes. We further explain how to twist optical fibres without incurring breakage or substantial loss of optical power.

Panel connections of glass fibre optic cables are often cumbersome and inefficient. An example is a patch panel for a communications network in which a great number of side-by-side fibre cables are connected endwise to the face of the panel. The cables extend outwardly in a group and bend only gradually from the connection to avoid mechanical failure of the glass fibres and signal loss. Routing of fibre cables in restricted spaces, as in an automobiles, presents similar problems.

Fibre optic device packages are often large and cumbersome due to large radius bends required in glass fibres within the packages.

EP-A-301840 discloses a method of providing bent optical fibre with a radius down to the order of 2cm by stripping the cladding, bending and annealing to reduce the resultant strains. FR-A-2426920 uses a housing at a bend to relieve strain in the bent fibre; the housing being clamped to the fibre on either side of the bend.

According to one aspect of the present invention, we provide a routing device for changing the direction of a fibre optic path from a first axis that has an angular relationship to a second non-colinear axis, said routing device comprising:
a short length of low-loss optical fibre having first and second directed fibre portions aligned respectively with said first and second axes and a mid-fibre portion integral with said first and second directed fibre portions and extending through an arc of radius of the order of two centimetres or less between said first and second directed fibre portions, and an outer member fixing said first and second directed fibre portions relative to one another in said angular relationship, said outer member serving to protect said first and second directed fibre portions and said mid-fibre portion from the environment; characterised in that said mid-fibre portion has a cross-sectional diameter which is substantially reduced in comparison with the cross-sectional diameters of said first and second portions, said mid-fibre portion including both the region of said arc where it is bent and immediately adjacent regions integral with said first and second directed fibre portions and extending along said first and second axes, said reduced cross-sectional diameter reducing likelihood of mechanical failure over time after use without introducing substantial optical loss.

The bent fibre portion may be given a special treated state that further reduces likelihood of mechanical failure over time. Depending upon the application and the particular treatment employed, bend loss of say 10 percent may be tolerated or bend loss can be reduced to a minimal amount. Additional treatment may include annealing heat treatment, and/or provision, effectively, of air cladding in the region of the bend.

According to a second and alternative aspect of this invention, we provide a movable joint assembly for an optical fibre comprising: a first housing member; a second housing member mounted for movement with respect to said first housing member, said first and second housing members being movable with respect to each other to a limited extent in the joint assembly; and a short length of low-loss optical fibre having first and second portions and a mid-fibre portion, said first and second portions being fixed respectively to said first and second housing members, said mid-fibre portion having a cross-sectional diameter that is substantially reduced in comparison with the cross-sectional diameters of said first and second portions, said joint assembly being arranged so that, in use, said mid-fibre portion can be being subject to a loading by virtue of relative movement between said first housing member and said second housing member, said loading including at least one of bending and torsion, and said reduced cross-sectional diameter reducing likelihood of mechanical failure over time after repeated loading without introducing substantial optical loss.

The invention provides in a third alternative aspect thereof, a slip joint for an optical fibre, characterized in comprising: a first housing member; a second housing member mounted for translation with respect to said first housing member; and a short length of low-loss optical fibre having first and second portions and a mid-fibre portion, said first and second portions being fixed respectively to said first and second housing members, said mid-fibre portion having a cross-sectional diameter that is substantially reduced in comparison with the cross-sectional diameters of said first and second portions, said mid-fibre portion being bent into the form of a helical coil such that, in use, when said first and second housing members move toward each other in said slip joint said helical coil is compressed and when, in use, said members move away from each other said helical coil is expanded, and said reduced cross-sectional diameter reducing likelihood of mechanical failure over time after repeated compressions and expansions without introducing substantial optical loss.

In a fourth alternative aspect of the invention, there is provided a rotary joint for an optical fibre comprising: a first housing member; a second housing member; and a short length of low-loss optical fibre having first and second portions and a mid-fibre portion, said first and second portions being fixed respectively to said first and second housing members, said mid-fibre portion having a cross-sectional diameter that is substantially reduced in comparison with the cross-sectional diameters of said first and second portions, said mid-fibre portion being twistable by relative rotation between said first and second housing members within the rotary joint about an axis defined by said mid-fibre portion, and said reduced cross-sectional diameter reducing likelihood of mechanical failure over time after repeated relative rotations without introducing substantial optical loss.

In the region where the exterior of the fibre is exposed to an external environment having an index of refraction substantially lower than that of the solid clad layer, its reduced diameter causes the fibre to conduct light by internal reflection attributable at least in part to the difference in index of refraction at the interface between the exterior of the fibre and the external environment. By this means light energy can be transmitted through the region with substantially lower bend-loss than a similarly bent section of the main length of the fibre. It is this region that is bent and/or twisted relative to an adjacent portion of the fibre, without causing substantial light loss attributable to the orientation. In both single mode and multimode fibres, the optical mechanism which allows a very significant reduction in bend radius relates to the change of waveguide structure accompanying diameter reduction.

Optical fibres typically have a core with index of refraction N₁ somewhat greater than the index of the surrounding cladding material N₂. It is customary to characterize the relationship between core and cladding indices by a percentage difference Δ (delta) defined by equation 1 below. The term, delta, is sometimes called the profile parameter.${\text{Δ = (N}}_{\text{1}} {}^{\text{2}} {\text{- N}}_{\text{2}} {}^{\text{2}} {\text{)/2N}}_{\text{1}} {}^{\text{2}}$ Delta usually ranges from .001 to .030 with most fibre materials. This means that N₁ and N₂ are very nearly the same and often in the range of 1.5. Such fibres are referred to as weakly guiding fibers because of the low value of index difference. The greater the value of delta, the less susceptible a fiber to bending losses.

When the diameter of the fibre is reduced, for example by heating and redrawing the heated region, the cladding and core diameters are both reduced. It is found that eventually the outer diameter of the reduced fibre becomes so small that the original cladding material is no longer effective as a cladding. The fibre becomes essentially clad by the surrounding medium. In the event that the surrounding medium is air, the value of N₂ decreases to 1.0. For typical cores having N₁ in the range of 1.5, this results in an increase in delta of about 100 fold. Because of this dramatic increase in delta, the reduced diameter fibre is able to guide light around much smaller bends than the original fibre without loss of light.

Because this enables the achievement of miniature bends relative to those heretofore achieved, the invention may be seen as a "miniature bend invention", but the concepts and contributions of the invention go far beyond that important achievement.

The bend may extend through any bend having an angular range substantially greater than zero angular degrees and may exceed multiples of 360 angular degrees, e.g., the fibre may be coiled.

In various embodiments, the bend angle is about 90° or about 180°.

The radius of curvature of the bend is suitably less than 1000 times the radius of the core of the unaltered main length of the fibre. The selected region is bent tightly around a small diameter support and in certain embodiments the selected region is wrapped a multiplicity of turns around the small diameter support.

Preferred embodiments in which the fibre is bent comprise important specific devices. One of these is an optic connector device. Preferably in such a device the fibre optic path extends from a fibre butt end forming a connection interface having a first axis of orientation through the bend to a fibre portion having an axis lying at a substantial angle to the first axis.

Another important use is to realize an improved joint assembly in which regions of the fibre adjacent the selected region are secured in respective members of a joint which are movable with respect to each other to a limited extend with corresponding bending of the selected region.

Another important use is to realize improved optic couplers. In one case where the optic coupler device is formed of a plurality of optic fibres, an extension of one of the fibres forms a fibre optic path having a sharp bend, e.g. 90°, and in important instances 180°. In another case an electro-optic device incorporates a fibre optic coupler incorporating a miniature bend. A package may comprise first and second optical components mounted on a rigid support and connected by the fibre optic path having a miniature bend, in some cases the first optical component being an optic coupler and the second component being selected from light emitters and light detectors; in other cases the package comprises a transceiver comprising a coupler, a light emitter and a light detector.

There are a number of methods by which a fibre can be processed to reduce the diameter in a short region. We describe redrawing the fibre in connection with the preferred embodiments. This simple procedure requires that the unjacketed optical fibre be heated along a length of a few millimetres until the fibre material reaches a suitable working temperature. The fibre is then drawn so as to elongate the heated region resulting in a gradual taper between the original fibre and the region of reduced cross-sectional area. When done properly the reduced region has nominally uniform cross-section throughout the effective length of reduction.

Alternatively, fibres may be etched using, e.g., a solution of hydrofluoric acid. Etching, as discussed herein includes all forms of molecular processing. Therefore, plasma etching, ion milling, solvent processing, and any other means relying on the chemical properties of the fibre are considered to be means of etching. Fibres may also be reshaped by mechanical means such as by grinding or polishing. In practice a combination of means often is best to achieve a particular desired final diameter or an intermediate diameter or shape suitable for secondary processing to the final reduced cross-section shape.

Fibres of greatly reduced diameter and relatively short length. e.g., 2 cm, can be twisted through many complete rotations before breaking. This provides the means to achieve a miniature rotational joint component featuring a continuous length of fibre between units interconnected by an embodiment of rotary joint constructed according to the present invention. Such a joint suitably incorporates a single fibre fixed at both ends of a mechanical means comprising two axially aligned pieces which are free to rotate relative to one another about the axis. The fibre section between the fixed points, i.e., that section of fibre subject to twisting when the mechanical means are rotated, is of greatly reduced diameter. Fibres exiting from the rotational section are of original diameter and can be spliced into other fibre optics with very low loss. The entire assembly can be made very small, of the order of a few centimeters in length and about a centimeter in diameter, and produces no modulation of optical power in the fiber when rotated. There is, of course, a finite limit to the number of full twists allowed, but for many industrial machine operations, oscillatory rotations of plus or minus 45 angular degrees to plus or minus 360 angular degrees are common. We can easily meet such requirements for a rotary joint. Similarly, hinge joint, linear translation joints, universal joints, and vibration isolators can be fashioned using the methods described herein.

Reference is made to the following description of preferred embodiments for further novel features.

In the drawings:

Fig. 1 shows an optical fibre in successive steps of cross-sectional area reduction including: a) a side view of fibre with jacket removed; b) a side view of fibre after diameter reduction; c) a side view of bent reduced fibre; and d) sections of the fibre area in the original and reduced regions.

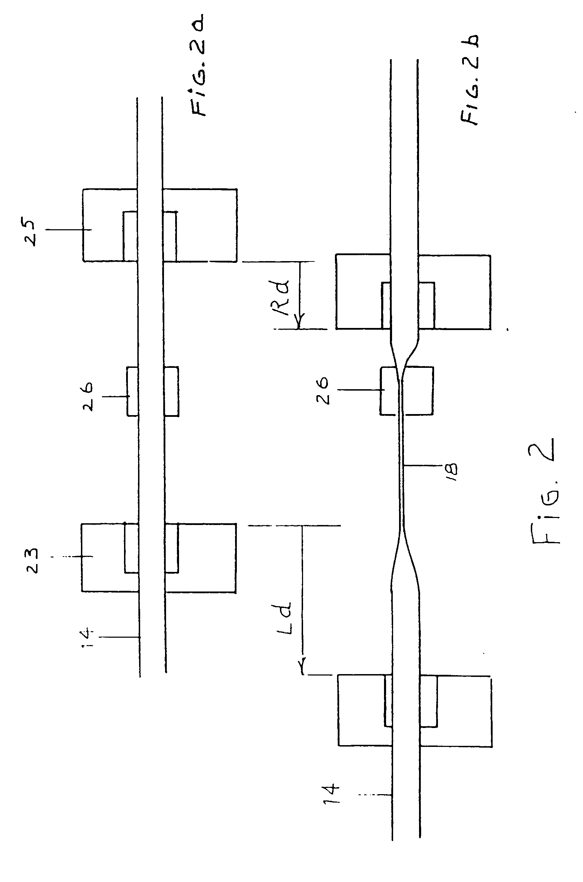

Fig. 2 is a top view schematically illustrating a differential speed uni-directional drawing method: a) before drawing, and b) after drawing.

Fig. 3 is a three-dimensional view of a mounting means that fixes the angle of the miniaturized bend.

Fig. 4a is a sectional side view illustrating the main elements of a conventional connector.

Fig. 4b is a sectional side view illustrating the main elements of a right-angle connector featuring a miniature bend.

Fig. 5 is a three-dimensional view of a reduced fibre fixed in a 180 angular degree bend.

Fig. 6 is a sectional side view of a free standing helical coil of reduced fibre in a linear slip joint application.

Fig. 7 is a sectional side view of a length of reduced fibre mounted in a mechanical means suitable to serve as a rotational joint.

Fig. 8 is a top view of: a) a fibre optic transceiver using a conventional coupler and full sized fibres, and b) a transceiver featuring a coupler constructed employing the teachings of the present invention.

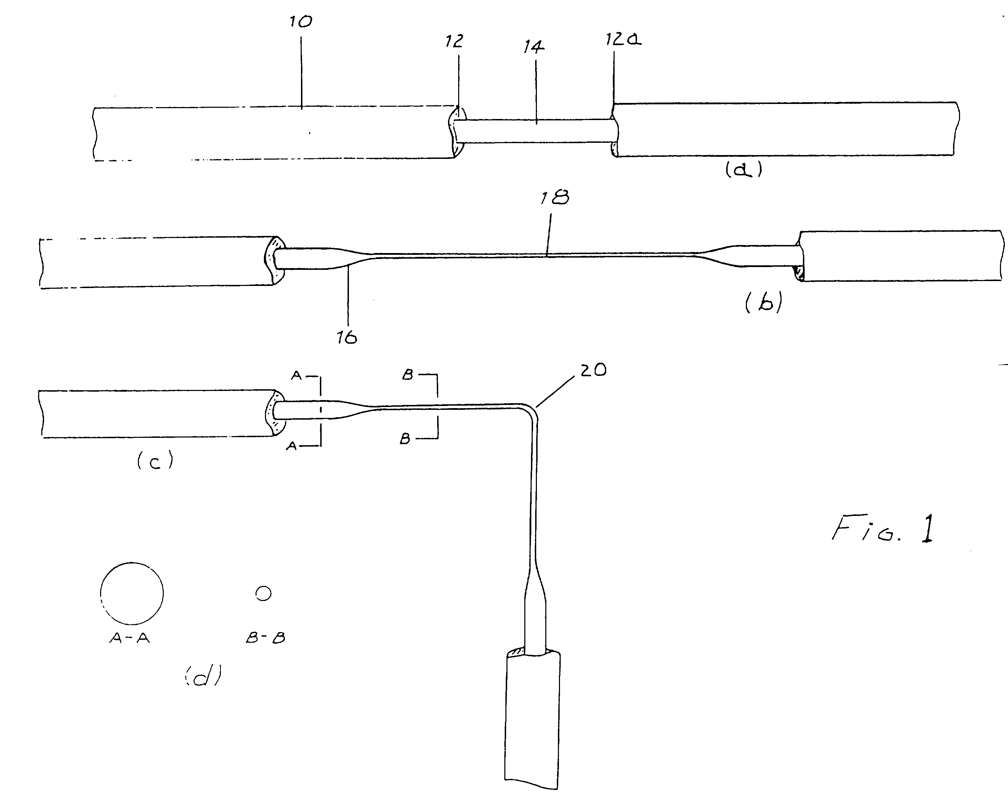

Fig. 1 illustrates the fundamental concept of the miniature bend. An optical fibre 14 is usually enclosed in a jacketing material 10. The optical fibre 14 is exposed by cutting away a portion of the jacket as between 12 and 12a in Fig. 1a. By means to be discussed herein, the optical fibre 14 is processed so that a selected region of reduced cross-sectional area 18 results. The term cross-section here applies to sections A-A and B-B of Fig. 1c viewed into the axial direction of the fibre. The section A-A represents the original fibre and B-B the reduced fibre as further illustrated in Fig. 1d. In the region of reduced cross-sectional area 18, a bend 20 as illustrated in Fig. 1c can be much smaller than a bend in the original fibre.

The methods of reducing the cross-sectional area of a fibre include etching, machining, and drawing. Combinations of these techniques can also be used. While benefits accrue independently of the process used to achieve the reduction, a preferred approach is discussed here.

Drawing a fibre to reduce the cross-sectional area typically has involved heating a region of the fibre to a suitable working temperature and pulling on one or both ends of the fibre so as to elongate the heated region. Experience has shown that single mode fibres can be drawn from an original overall diameter of 130 microns to diameter of less than 0.1 micron with less than 1 percent excess loss of optical power throughout by such well known drawing means. We refer to our preferred method as "differential speed uni-directional drawing".

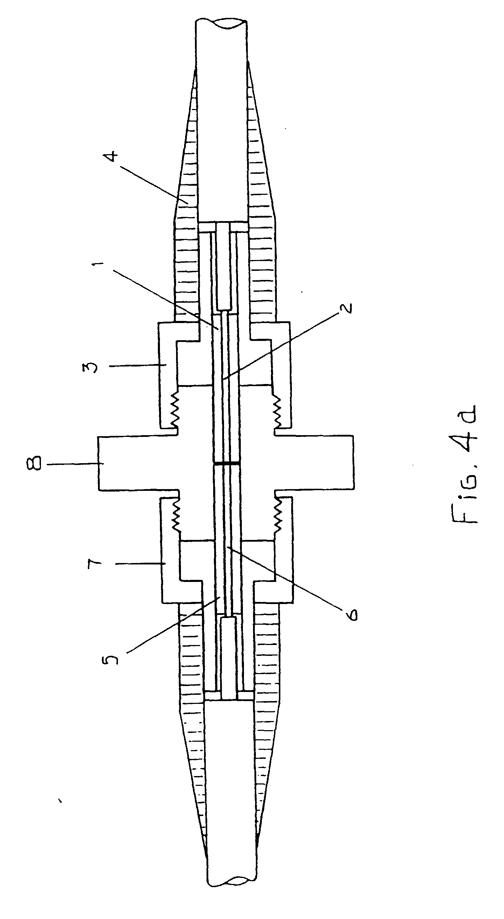

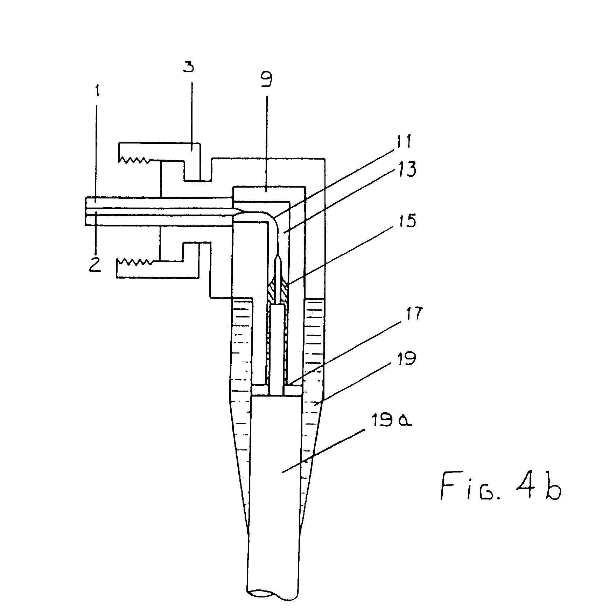

Differential speed uni-directional drawing describes the technique of moving both ends of the heated optical fibre in the same direction at different speeds thus creating a drawing tension in the fibre and hence elongation of the heated region. This is illustrated schematically in Fig. 4. The resulting reduced cross-sectional area remains constant over any desired length of processed fibre. Phenomenologically, the region of constant cross-sectional area 18 results because a steady state is reached wherein fibre material is fed into and extracted from the heated region 26 in Fig. 4 at the same rate. The cross-sectional area required for steady state material flow depends on the difference in speed between the left and right stage, 23 and 25 respectively, when both stages move in the same direction. Therefore, by calibrating the speeds of the stages, long sections of fibre with the same cross-sectional area and shape are produced, and the reduced area can be preselected by choosing a prescribed speed difference.

Uni-directional differential speed drawing uses a very small localized heat source such as a microtorch or focused laser beam, operates at relatively small speed differences, and is used to reshape a relatively short length of existing fibre.

A fibre with cross-sectional area of less than a few square microns requires some form of protective packaging. It is not the purpose of this disclosure to develop all such protective designs, but rather to indicate the scope of some presently embodied as well as foreseen applications.

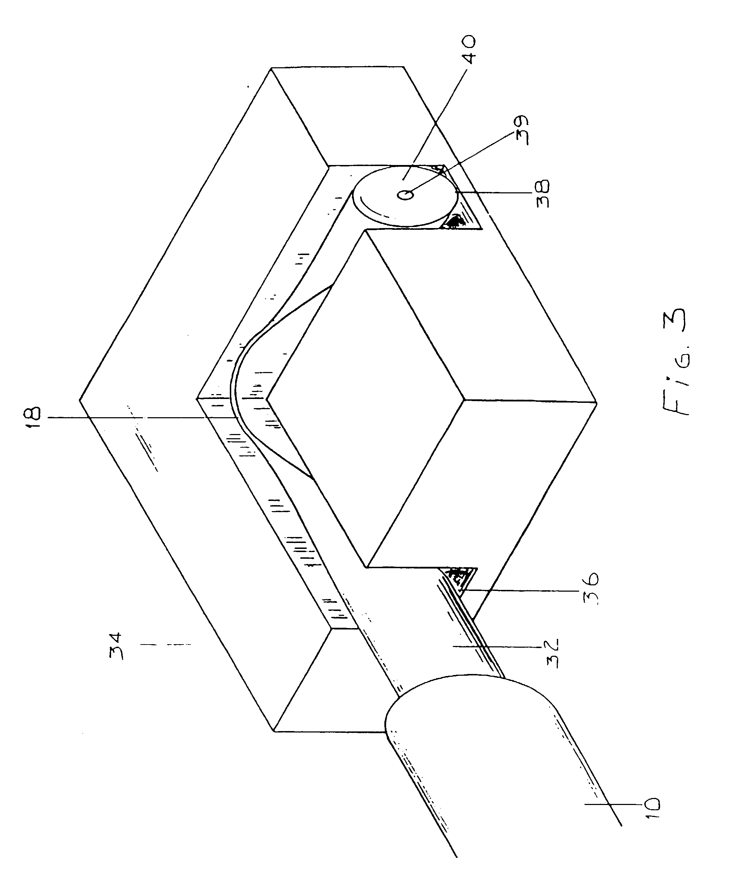

Bends can be embodied in manners to fix one or more of the radii of curvature, the length of curvature, and the bend angle. For example. Fig. 3 illustrates a jacketed optical fiber 32 mounted in a right-angle grooved supporting structure 34. The jacket 10 is shown removed from the section of fiber entering the supporting structure as might result from the processing steps outlined in the discussion of Fig. 1. Here the reduced fibre 18 is bent around 90 angular degrees. It can be seen that the radius of curvature possible in this structure is very small. Typically the fibre can be reduced sufficiently that the mean or minimum radius of curvature is less than the diameter (or smallest overall cross-sectional dimension) of the original fibre. The entire structure of Fig. 3, therefore measures less than 3 millimetres on each side. Alternative prior art structure would have to measure over 2 centimeters on each side to avoid both excessive optical power loss and the risk of unpredictable breakage.

The bend embodiment depicted generally in Fig. 3 can be used as a miniature right angle routing component. If one thinks of the fibre as entering the structure at the point labeled 36 and exiting the structure at 38, the endface 40 of the exiting fibre might be polished to promote coupling to a photo diode, light emitting diode (LED), laser diode (LD), or for butt coupling to another optical fibre. Any of these devices can be fixed with appropriate bonding methods directly to the endface of the fibre to align with the core 39. In embodiments of those types, the structure shown becomes a right angle pigtail device. Unlike any bending method previously known, this structure is small enough to fit within conventional photodiode, LED, and LD packages. In principle the photodiode can even be deposited directly on the polished end of the integral fibre/support structure.

Alternatively the fibre could be polished at both end 36 and 38. Such an embodiment can be used as a surface mounted optical bend for routing optical power between elements in miniature electro-optic or integrated optic assemblies. Angles other than 90 degrees and supporting structures more robust than that illustrated conceptually in Fig. 3 are envisioned.

Similarly, the concept of Fig. 3 can be extended to include convenient means of routing fibres around bends external to equipment packages. The fibre leaving at point 38 may continue beyond the edge of the bend supporting structure. In such embodiment the structure is a miniature right angle bend useful in packaging fibre runs inside or external to fiber optic equipment.

Figs. 4a and 4b illustrate the advantages of using a miniature bend in a connector assembly. In Fig. 4a is shown a typical mated pair of fibre optic connectors. Fibres 2 and 6 are held in alignment using ferrules 1 and 5 which closely interfit with the alignment piece 8 which may be bulkhead mounted. The fibres exit the mechanical connector assembly in substantially straight lines through a supporting member 4.

In Fig. 4b a right-angle connector is shown wherein the mechanical supporting means is comprised of an inner guide 9, and outer housing 9a, and a flexible stress relief 19. The miniature bend 11 is formed by means discussed and assembled into the connector with one fibre end fixed by the alignment ferrule 1 and the other end fixed, e.g. by epoxy 15 at the attachment end 17 of the inner housing 9.

The main section of the optical fibre typically exits from such a connector or connector adaptor assembly in a fibre optic cable 19a. The cable may contain strength members and protective layers not shown in Fig. 4b. It is understood by those skilled in the art that such mechanical cabling requires some form of mechanical termination at the connector output 17. The simplest form of termination, i.e., adhesive 15 fixing is illustrated. Adhesive may also be applied along the internal surfaces of the flexible stress relief 19 thus attaching the cable outer covering 19a to the stress relief 19.

As another example, fibre optic cables leading to desktop equipment can be routed over the edge of the desk using a protective assembly comprised of a supporting structure to contain a miniature bend and suitable outer packaging to allow easy and esthetically pleasing integration into the office environment. The bend supporting structure might be made flexible to accommodate a broader range of potential needs.

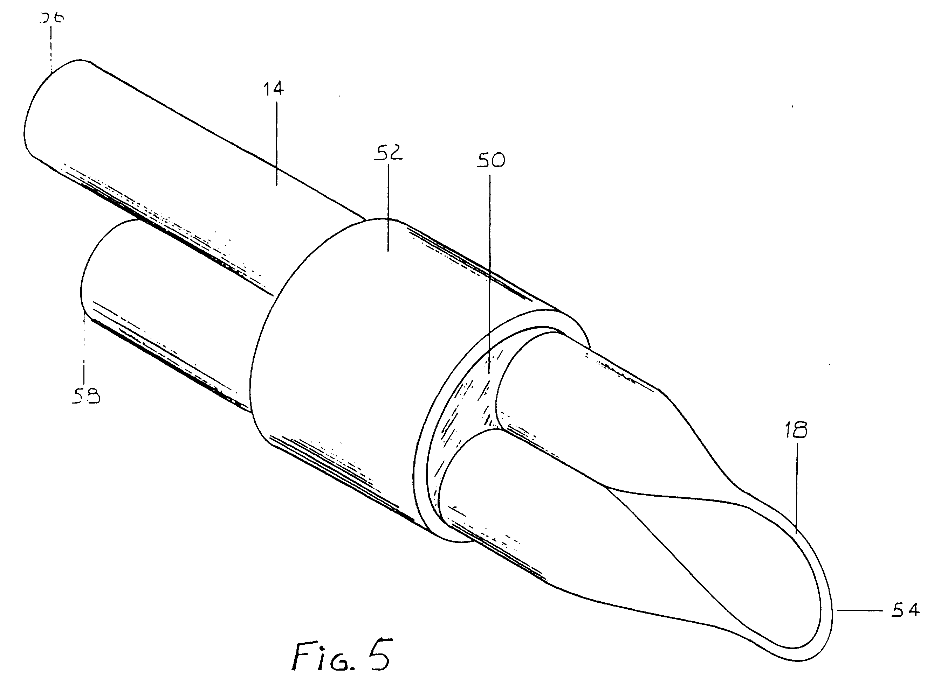

Shown in Fig. 5 is a fixed 180 degree bend embodiment. Here a fibre 14 is held by e.g., adhesive 50 in a sleeve 52. This embodiment might be placed anywhere within a continuous length of fibre although here the fibre ends 56 and 58 are shown truncated for graphic convenience. The radius of curvature of the 180 degree bend 54 is essentially determined by the radius of the original fibre. The structure provides a miniature means to loop a fibre back in the direction from which it came without requiring mirrors and alignment means. This can prove very useful in integrated optic applications where 180 degrees bend within, e.g. a Lithium Niobate waveguide, cannot be made so small.

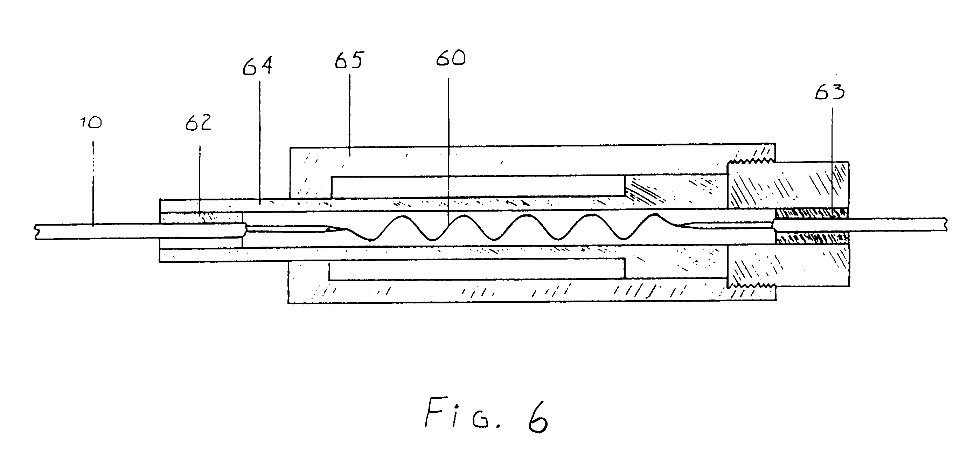

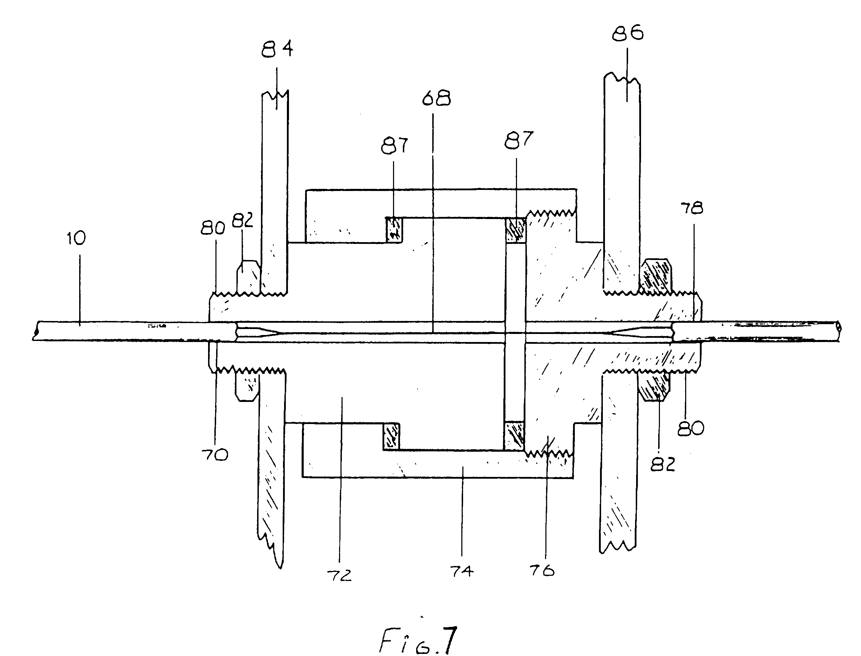

A helical coil of reduced fibre may be incorporated into mechanical means to form a linear slip joint as illustrated in Fig. 6. A jacketed optical fibre 10, processed as previously described, is reduced in cross-sectional area and wound into a helical coil 60. The free standing fibre coil 60 can be stress relieved by annealing methods known to those skilled in the art if desired. The coil 60, of diameter of a few millimeters, it subsequently mounted with each end fixed by adhesive 62 and 63 in separate mechanical means 64, and 65 which are free to slide, one upon the other. Means 64 and 65 are assembled so that the distance one might slide relative to the other is limited. When means 64 slides upon means 65, the coil of fibre 60 is either extended or compressed in a spring-like fashion. In Fig. 7 the coil is shown fully compressed. By virtue of the reduced cross-sectional area, a short length of coiled fiber of the order of 5 cm can be made to withstand linear displacements of more than 3 cm.

Fig. 7 illustrates the basic elements of a typical fibre optical rotational connection embodiment. An optical fibre 10 is reduced in cross-sectional area forming a length of about 1 inch (2.54cm) of reduced fibre 68. One end 70 of the fibre is fixed in one separate part 72 of the rotational connection using e.g. adhesive. The other separate part of the connection 74 is mated e.g., by threading the end piece 76 into the body 74 to form the mechanical structure of the connection as depicted here. The other end 78 of the fibre is fixed to the end piece 76 of the connection using e.g., adhesive. The separate parts of the connection are free to rotate about the common longitudinal axis and the reduced fibre 68 lies more or less on that axis. The ends of the connection might be threaded as shown 80 and fixed to separate mechanical structures 84, 86 using nuts 82. A pair of bushings or thrust bearings 87 can be used to reduce slack between the mated rotating mechanical surfaces.

When the separate parts 72 and 74 of the connection are rotated, torsion is applied to the fibre. Such a connection using about 1 inch (2.54cm) of fibre reduced to 1 micron diameter can be rotated through more than 360 angular degrees without breakage or loss of optical power, but clearly there is a limit to the number of turns of rotation possible.

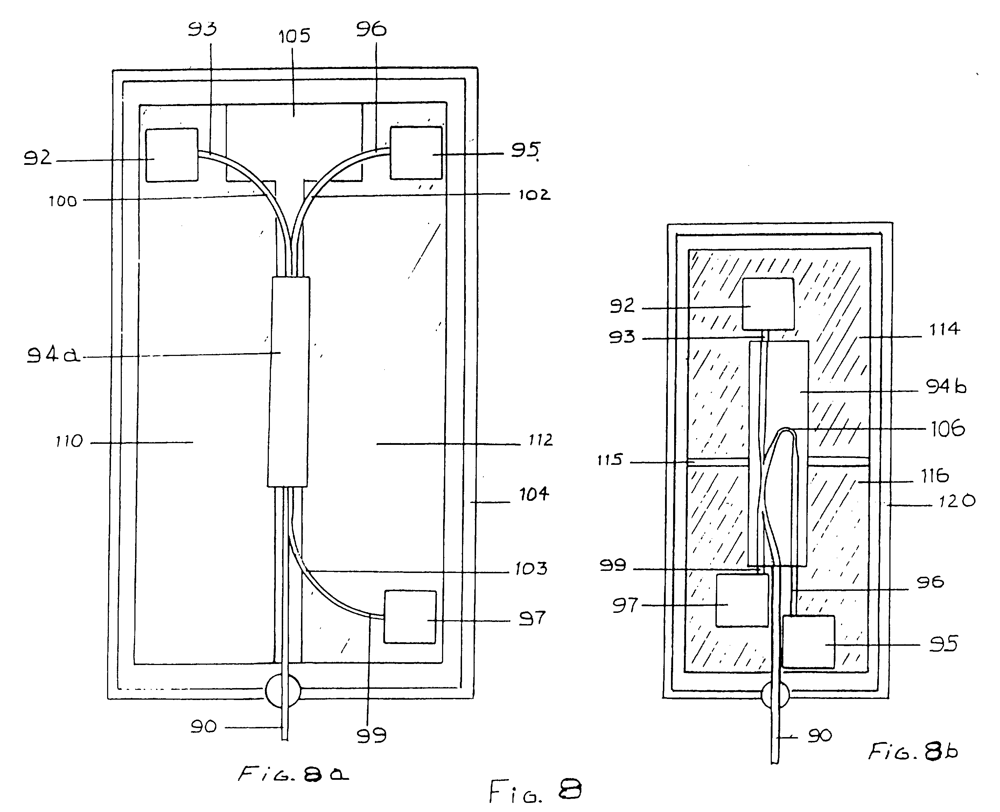

Application of our techniques can lead to miniaturization of electro-optic units. As illustrated schematically in Fig. 8a, a typical fibre optic transceiver uses a bidirectional single fiber link in and out 90. A source of optical power 92 may be connected to one leg 93 of a fibre optic coupler generally indicated by the numeral 94a. A photodetector 95 is connected to another leg 96 of the coupler 94a on the same side of the coupler as the optical source 92. Light transmitted by the source 92 travels into the coupler 94a, through the optical coupling region and out of the link fibre 90.

The same circuit function is achieved in much less space by using a fibre optic coupler 94b fashioned to include a miniature bend 106 within the coupler package, as shown in Fig. 8b.

## Claims

1. A routing device for changing the direction of a fibre optic path from a first axis that has an angular relationship to a second non-colinear axis, said routing device comprising:
a short length of low-loss optical fibre having first and second directed fibre portions aligned respectively with said first and second axes and a mid-fibre portion integral with said first and second directed fibre portions and extending through an arc of radius of the order of two centimetres or less between said first and second directed fibre portions, and an outer member fixing said first and second directed fibre portions relative to one another in said angular relationship, said outer member serving to protect said first and second directed fibre portions and said mid-fibre portion from the environment; characterised in that said mid-fibre portion has a cross-sectional diameter which is substantially reduced in comparison with the cross-sectional diameters of said first and second portions, said mid-fibre portion including both the region of said arc where it is bent and immediately adjacent regions integral with said first and second directed fibre portions and extending along said first and second axes, said reduced cross-sectional diameter reducing likelihood of mechanical failure over time after use without introducing substantial optical loss.

2. A routing device according to Claim 1, further characterised in that the radius of said arc is less than 1 centimetre.

3. A routing device according to Claim 1, further characterised in that said mid-fibre portion is disposed in a passage of said outer member larger in cross section than the cross section of said mid-fibre portion.

4. A routing device according to Claim 1, further characterised in that in said mid-fibre portion the reduction in diameter is made such that the original cladding is no longer effective as cladding and the lower index of refraction of the external environment of said fibre at said bend enables transmission of light energy through said bend with substantially less bend-loss than would occur if fibres not reduced in diameter were bent.

5. A routing device according to any of Claims 1, 2 or 3 further characterised in that said fibre in the region where it is bent has been treated to be in a stress-relieved annealed state.

6. A routing device according to any of Claims 1 to 5, further characterised in that said predetermined axes are disposed with respect to each other in a right angle.

7. A routing device according to any of Claims 1 to 4, further characterised in that the optical fibre is single mode.

8. A routing device according to any of Claims 1 to 4, further characterised in that the optical fibre is multimode.

9. A routing device according to any of Claims 1 to 4, further characterised in that the optical fibre is polarization holding fibre.

10. A routing device according to Claim 1, further characterised in that said reduced cross-sectional diameter mid-fibre portion results from use of one or more of the fibre shaping methods consisting of etching, polishing, and drawing.

11. A routing device according to Claim 1, further characterised in that said mid-fibre portion has a reduced diameter as a result of differential-speed unidirectional drawing.

12. A routing device according to any preceding Claim, further characterised in that it is in the form of an angled adaptor, said first and second directed portions terminating in light-transferring end faces, and said device including connector means for securing respective additional optical fibres in light-transferring relationship with said end faces, whereby, for instance, a patch cord can be made up by connection of one end of said adapter to the end of a fibre cable.

13. A routing device according to any of Claims 1 to 11, further characterised in that it is formed as an integral portion of a patch cord or the like, said optical fibre extending integrally outwardly from the first said directed portion in a flexible jacket, and said second directed portion terminating in a light-transferring end face suitable for connection to another optical fibre in light-transferring relationship.

14. A routing device according to any of Claims 1 to 11, further characterised in that it is formed in the middle of a flexible optical cable, said optical fibre extending integrally outwardly from each of said directed portions in a flexible jacket.

15. A routing device comprising a fibre optic ribbon comprised of a plurality of optical fibres, each of said fibres consisting of a routing device according to any one of Claims 1 to 11, there being a common outer member for all said fibres.

16. A connection assembly comprising a connection panel presenting a multiplicity of optical path end faces for connection to optical fibres, and a corresponding series of patch cords, characterized in that each said patch cord comprises a routing device according to Claims 12 or 13, the patch cords being connected to said connection panel with said end faces in light-transferring relationship with the optic paths of said panel, and the direction change provided by said routing devices enabling said patch cords to extend in desired lateral, convenient relationships to said connection panel.

17. A movable joint assembly for an optical fibre comprising: a first housing member; a second housing member mounted for movement with respect to said first housing member, said first and second housing members being movable with respect to each other to a limited extent and a short length of low-loss optical fibre having first and second portions and a mid-fibre portion, said first and second portions being fixed respectively to said first and second housing members, said mid-fibre portion having a cross-sectional diameter that is substantially reduced in comparison with the cross-sectional diameters of said first and second portions, said joint assembly being arranged so that, in use, said mid-fibre portion can be subject to a loading by virtue of relative movement between said first housing member and said second housing member, said loading including at least one of bending and torsion, and said reduced cross-sectional diameter reducing likelihood of mechanical failure over time after repeated loading without introducing substantial optical loss.

18. A slip joint for an optical fibre comprising: a first housing member; a second housing member mounted for translation with respect to said first housing member; and a short length of low-loss optical fibre having first and second portions and a mid-fibre portion, said first and second portions being fixed respectively to said first and second housing members, said mid-fibre portion having a cross-sectional diameter that is substantially reduced in comparison with the cross-sectional diameters of said first and second portions, said mid-fibre portion being bent into the form of a helical coil such that, in use, when said first and second housing members move toward each other said helical coil is compressed and when, in use, said members move away from each other said helical coil is expanded, and said reduced cross-sectional diameter reducing likelihood of mechanical failure over time after repeated compressions and expansions without introducing substantial optical loss.

19. A rotary joint for an optical fibre, comprising: a first housing member; a second housing member; and a short length of low-loss optical fibre having first and second portions and a mid-fibre portion, said first and second portions being fixed respectively to said first and second housing members, said mid-fibre portion having a cross-sectional diameter that is substantially reduced in comparison with the cross-sectional diameters of said first and second portions, wherein, in use, said mid-fibre portion being twistable by relative rotation between said first and second housing members about an axis defined by said mid-fibre portion, and said reduced cross-sectional diameter reducing the likelihood of mechanical failure over time after repeated relative rotations without introducing substantial optical loss.

20. A fibre optic coupler device comprising a plurality of coupled optical fibres, one or more of which are provided with a routing device according to Claim 1.

21. A package incorporating first and second electro-optic devices; at least one routing device according to Claim 2; optionally, one or more fibre optic devices; and optionally, one or more integrated optic components, any and all of which devices and components are mounted on a rigid support and interconnected using one or more of said routing devices; the first electro-optic device being a light emitter, and the second electro-optic device being a light detector; and said integrated optic component(s) comprising optical multiplexer(s), optical modulator(s), optical phase shifter(s), fused fibre optic coupler(s), and/or optical polarization controller(s).

## Patentansprüche

1. Eine den Weg bestimmende Vorrichtung zum Ändern der Richtung einer faseroptischen Bahn aus einer eine Winkelbeziehung aufweisenden ersten Achse in eine zweite, nicht-kolineare Achse mit:
einer kurzen Länge einer niedrige Verluste aufweisenden optischen Faser mit ersten und zweiten gerichteten, mit der ersten bzw. der zweiten Achse ausgerichteten Faserabschnitten und mit einem mittleren, mit den ersten und den zweiten gerichteten Faserabschnitten einstückig ausgebildeten Faserabschnitt und verlaufend über einen Bogenhalbmesser in der Größenordnung von zwei Zentimetern oder weniger zwischen dem ersten und dem zweiten gerichteten Faserabschnitt und mit einem den ersten und den zweiten gerichteten Faserabschnitt in der genannten Winkelbeziehung relativ zueinander fixierenden Außenglied, das zum Schutz des ersten und des zweiten gerichteten Faserabschnittes und des mittleren Faserabschnittes vor der Umgebung dient, dadurch gekennzeichnet, daß der mittlere Faserabschnitt einen Querschnitt mit einem Durchmesser aufweist, der im Vergleich mit den Durchmessern der Querschnitte des ersten und des zweiten Abschnittes wesentlich herabgesetzt ist, der mittlere Faserabschnitt sowohl das Gebiet des Bogens, wo er gebogen ist, und sich unmittelbar anschließende Gebiete, die mit dem ersten und dem zweiten gerichteten Faserabschnitt einstückig ausgebildet sind und entlang der ersten und der zweiten Achse verlaufen, umfaßt und der Querschnitt mit verringertem Durchmesser die Wahrscheinlichkeit eines mechanischen Versagens über der Zeit nach der Anwendung ohne Einführen wesentlicher optischer Verluste verringert.

2. Vorrichtung nach Anspruch 1, weiter dadurch gekennzeichnet, daß der Halbmesser des Bogens unter einem Zentimeter liegt.

3. Vorrichtung nach Anspruch 1, weiter dadurch gekennzeichnet, daß der mittlere Faserabschnitt in einem Durchgang des Außengliedes angeordnet ist, der in seinem Querschnitt größer als der Querschnitt des mittleren Faserabschnittes ist.

4. Vorrichtung nach Anspruch 1, weiter dadurch gekennzeichnet, daß in dem mittleren Faserabschnitt die Verminderung im Durchmesser so gestaltet ist, daß der ursprüngliche Überzug nicht mehr als solcher wirksam ist und der untere Brechungsindex der äußeren Umgebung der Faser an dieser Biegung den Durchtritt von Lichtenergie durch die Biegung mit im wesentlichen weniger Biegungsverlusten zuläßt, als wenn nicht im Durchmesser herabgesetzte Fasern gebogen wären.

5. Vorrichtung nach irgendeinem der Ansprüche 1, 2 oder 3, weiter dadurch gekennzeichnet, daß die Faser in dem Gebiet, in dem sie gebogen ist, behandelt wurde und sich in einem von Spannungen befreiten entspannten Zustand befindet.

6. Vorrichtung nach irgendeinem der Ansprüche 1 bis 5, weiter dadurch gekennzeichnet, daß die vorbestimmten Achsen in einem rechten Winkel zueinander angeordnet sind.

7. Vorrichtung nach irgendeinem der Ansprüche 1 bis 4, weiter dadurch gekennzeichnet, daß sich die optische Faser in einem Einfachmodus befindet.

8. Vorrichtung nach irgendeinem der Ansprüche 1 bis 4, weiter dadurch gekennzeichnet, daß sich die optische Faser in einem Mehrfachmodus befindet.

9. Vorrichtung nach irgendeinem der Ansprüche 1 bis 4, weiter dadurch gekennzeichnet, daß die optische Faser eine Polarisationshaltefaser ist.

10. Vorrichtung nach Anspruch 1, weiter dadurch gekennzeichnet, daß sich der verminderte Durchmesser des Querschnitts des mittleren Faserabschnittes aus der Anwendung einer oder mehrerer Faserformverfahren wie Ätzen, Polieren und Ziehen ergibt.

11. Vorrichtung nach Anspruch 1, weiter dadurch gekennzeichnet, daß der mittlere Faserabschnitt einen verringerten Durchmesser als Ergebnis des einseitig gerichteten Differentialgeschwindigkeitsziehens ist.

12. Vorrichtung nach irgendeinem der vorhergehenden Ansprüche, dadurch gekennzeichnet, daß sie in der Form eines Winkelform aufweisenden Adapters vorliegt, der erste und der zweite gerichtete Abschnitt in Licht übertragenden Stirnseiten enden und die Vorrichtung Verbindermittel zum Befestigen jeweiliger zusätzlicher optischer Fasern in einer Licht übertragenden Beziehung mit den Stirnseiten aufweist, wodurch zum Beispiel eine steckbare Verbindungsleitung durch Anschließen eines Endes des Adapters an das Ende eines Faserkabels ausgebildet werden kann.

13. Vorrichtung nach irgendeinem der Ansprüche 1 bis 11, weiter dadurch gekennzeichnet, daß sie als integraler Teil einer steckbaren Verbindungsleitung oder dergleichen ausgebildet ist, die optische Faser von dem ersten gerichteten Abschnitt in einem flexiblen Mantel integral nach außen verläuft und der zweite gerichtete Abschnitt in einer zum Anschließen an die andere optische Faser in Licht übertragender Beziehung geeigneten, Licht übertragenden Stirnseite endet.

14. Vorrichtung nach irgendeinem der Ansprüche 1 bis 11, weiter dadurch gekennzeichnet, daß sie in der Mitte eines flexiblen optischen Kabels ausgebildet ist und die optische Faser von jedem der gerichteten Abschnitte in einem flexiblen Mantel integral nach außen verläuft.

15. Vorrichtung aus einem faseroptischen Band aus einer Vielzahl von optischen Fasern, die sämtlich aus einer Vorrichtung nach irgendeinem der Ansprüche 1 bis 11 bestehen, wobei ein gemeinsames Außenglied für sämtliche Fasern vorhanden ist.

16. Eine Anschlußanordnung mit einer Anschlußplatte mit Ausbildung einer Vielzahl von Stirnseiten optischer Fasern zum Anschließen an optische Fasern und mit einer entsprechenden Reihe von steckbaren Verbindungsleitungen, dadurch gekennzeichnet, daß jede steckbare Verbindungsleitung eine Vorrichtung nach irgendeinem der Ansprüche 12 oder 13 aufweist und die steckbare Verbindungsleitungen an die Anschlußplatte angeschlossen sind mit sich mit den optischen Pfaden der Platte in Licht übertragender Beziehung befindenden Stirnseiten und wobei die von der Vorrichtung bewirkte Richtungsänderung einen Verlauf der steckbaren Verbindungsleitungen in gewünschter Seiten- und angemessener Beziehung zu der Anschlußplatte ermöglicht.

17. Eine verschiebbare Verbindunganordnung für eine optische Faser, bestehend aus einem ersten Gehäuseglied, einem zum Verschieben gegenüber dem ersten Gehäuseglied angeordneten zweiten Gehäuseglied, wobei das erste und das zweite Gehäuseglied in begrenztem Umfang gegeneinander verschiebbar sind, und einer kurzen Länge einer einen niedrigen Verlust aufweisenden optischen Faser mit einem ersten und einem zweiten Abschnitt und einem mittleren Faserabschnitt, wobei der erste und der zweite Abschnitt gegenüber dem ersten und dem zweiten Gehäuseglied fixiert sind, der mittlere Faserabschnitt einen Querschnitt mit einem Durchmesser aufweist, der gegenüber den Durchmessern der Querschnitte des ersten und des zweiten Abschnittes wesentlich herabgesetzt ist, die Verbindungsanordnung so ausgebildet ist, daß der mittlere Faserabschnitt bei Gebrauch einer Belastung aufgrund der Relativverschiebung zwischen dem ersten und dem zweiten Gehäuseglied ausgesetzt ist und diese Belastung mindestens eine Biege- und eine Verdrehungsbelastung ist, und der verringerte Durchmesser des Querschnitts die Wahrscheinlichkeit eines mechanischen Versagens über der Zeit nach wiederholter Belastung ohne Einführen wesentlicher optischer Verluste verringert.

18. Eine biegsame Verbindung für eine optische Faser, bestehend aus einem ersten Gehäuseglied, einem zwecks Seitenverschiebung gegenüber dem ersten Gehäuseglied angeordneten zweiten Gehäuseglied und einer kurzen Länge einer einen niedrigen Verlust aufweisenden optischen Faser mit einem ersten und einem zweiten mittleren Faserabschnitt, wobei der erste und der zweite Abschnitt gegenüber dem ersten und dem zweiten Gehäuseglied fixiert sind, der mittlere Faserabschnitt einen Querschnitt mit einem Durchmesser aufweist, der im Vergleich mit dem Durchmesser der Querschnitte des ersten und des zweiten Abschnittes wesentlich herabgesetzt ist, der mittlere Faserabschnit in die Form einer schraubenförmigen Spule gebogen ist, so daß diese im Gebrauch bei Aufeinanderzubewegen des ersten und des zweiten Gehäusegliedes zusammengedrückt und bei deren Voneinanderwegbewegen gedehnt wird, und der herabgesetzte Durchmesser des Querschnittes die Wahrscheinlichkeit eines mechanischen Versagens über der Zeit nach wiederholtem Zusammendrücken und Dehnen ohne Einleiten eines wesentlichen optischen Verlustes verringert.

19. Ein Drehgelenk für eine optische Faser, bestehend aus einem ersten Gehäuseglied, einem zweiten Gehäuseglied und einer kurzen Länge einer niedrige Verluste aufweisenden optischen Faser mit einem ersten und einem zweiten Abschnitt und einem mittleren Faserabschnitt, wobei der erste und der zweite Abschnitt gegenüber dem ersten und dem zweiten Gehäuseglied fixiert sind, der mittlere Faserabschnitt einen Querschnitt mit einem Durchmesser aufweist, der im Vergleich mit den Durchmessern der Querschnitte des ersten und des zweiten Abschnittes wesentlich herabgesetzt ist, so daß der mittlere Faserabschnitt bei Gebrauch durch eine Relativdrehung zwischen dem ersten und dem zweiten Gehäuseglied um eine durch den mittleren Faserabschnitt festgelegte Achse verdrehbar ist, und der verringerte Durchmesser des Querschnittes die Wahrscheinlichkeit eines mechanischen Versagens über der Zeit nach wiederholten Relativdrehungen ohne Einleiten eines wesentlichen optischen Verlustes verringert.

20. Eine faseroptische Kopplungsvorrichtung aus einer Vielzahl von gekoppelten optischen Fasern, von denen eine oder mehrere mit einer Vorrichtung nach Anspruch 1 versehen ist.

21. Eine Packung mit einer ersten und einer zweiten elektrooptischen Vorrichtung, mindestens einer Vorrichtung nach Anspruch 2, nach Wahl einer oder mehreren faseroptischen Vorrichtungen und nach Wahl einer oder mehreren integrierten optischen Komponenten, wobei irgendeine und sämtliche dieser Vorrichtungen und Komponenten auf einer starren Abstützung befestigt und unter Verwendung einer oder mehrerer dieser Vorrichtungen miteinander verbunden sind, die erste elektrooptische Vorrichtung ein Lichtemitter und die zweite elektrooptische Vorrichtung ein Lichtdetektor ist und die integrierte optische Vorrichtung (die integrierten optischen Vorrichtungen) einen optischen Multiplexer (optische Multiplexer), einen optischen Modulator (optische Modulatoren), einen optischen Phasenschieber (optische Phasenschieber), eine eingeschmolzene faseroptische Kupplung (eingeschmolzene faseroptische Kupplungen) und/oder einen optischen Polarisationsregler (optische Polarisationsregler) aufweist (aufweisen).

## Revendications

1. Dispositif d'acheminement destiné à changer la direction d'un trajet de fibre optique depuis un premier axe qui a une relation angulaire avec un second axe non-colinéaire, ledit dispositif d'acheminement comportant :
une courte longueur de fibre optique à faible perte ayant une première et une seconde partie de fibre dirigée, alignées respectivement avec lesdits premier et second axes et une partie de fibre médiane solidaire avec lesdites première et seconde parties de fibre dirigée et s'étendant sur un arc ayant un rayon de l'ordre de deux centimètres ou plus petit entre lesdites première et seconde parties de fibre dirigée, et un élément extérieur fixant lesdites première et seconde parties de fibre dirigée l'une par rapport à l'autre dans ladite relation angulaire, ledit élément extérieur servant à protéger lesdites première et seconde parties de fibre dirigée et ladite partie de fibre médiane vis-à-vis de l'environnement, caractérisé en ce que ladite partie de fibre médiane a un diamètre en coupe transversale qui est nettement réduit par comparaison aux diamètres en coupe transversale desdites première et seconde parties, ladite partie de fibre médiane comportant à la fois la zone dudit arc où elle est incurvée et des zones immédiatement adjacentes solidaires avec lesdites première et seconde parties de fibre dirigée et s'étendant le long desdits premier et second axes, ledit diamètre réduit en coupe transversale réduisant la probabilité d'une rupture mécanique avec le temps, après utilisation, sans introduire de perte optique importante.

2. Dispositif d'acheminement selon la revendication 1, caractérisé de plus en ce que le rayon dudit arc est plus petit que 1 centimètre.

3. Dispositif d'acheminement selon la revendication 1, caractérisé de plus en ce que ladite partie de fibre médiane est disposée dans un passage dudit élément extérieur ayant une coupe transversale plus grande que la coupe transversale de ladite partie de fibre médiane.

4. Dispositif d'acheminement selon la revendication 1, caractérisé de plus en ce que dans ladite partie de fibre médiane la réduction de diamètre est réalisée de telle sorte que la gaine d'origine n'est plus efficace en tant que gaine et l'indice de réfraction inférieur de l'environnement extérieur de ladite fibre au niveau de ladite incurvation permet une transmission d'énergie lumineuse à travers ladite incurvation avec nettement moins de perte par incurvation que cela n'existerait si les fibres n'avaient pas un diamètre réduit là où elles sont incurvées.

5. Dispositif d'acheminement selon l'une quelconque des revendications 1, 2 ou 3, caractérisé de plus en ce que ladite fibre dans la zone où elle est incurvée a été traitée pour être dans un état recuit sans contrainte.

6. Dispositif d'acheminement selon l'une quelconque des revendications 1 à 5, caractérisé de plus en ce que lesdits axes prédéterminés sont disposés à angle droit l'un par rapport à l'autre.

7. Dispositif d'acheminement selon l'une quelconque des revendications 1 à 4, caractérisé de plus en ce que la fibre optique est monomode.

8. Dispositif d'acheminement selon l'une quelconque des revendications 1 à 4, caractérisé de plus en ce que la fibre optique est multimode.

9. Dispositif d'acheminement selon l'une quelconque des revendications 1 à 4, caractérisé de plus en ce que la fibre optique est une fibre maintenant la polarisation.

10. Dispositif d'acheminement selon la revendication 1, caractérisé de plus en ce que ladite partie de fibre médiane à diamètre réduit en coupe transversale est le résultat d'une utilisation d'un ou plusieurs des procédés de mise en forme de fibre parmi la gravure, le polissage, et l'étirage.

11. Dispositif d'acheminement selon la revendication 1, caractérisé de plus en ce que ladite partie de fibre médiane a un diamètre réduit comme résultat d'un étirage unidirectionnel à différentiel de vitesse.

12. Dispositif d'acheminement selon l'une quelconque des revendications précédentes, caractérisé de plus en ce qu'il a la forme d'un adaptateur formant un angle, lesdites première et seconde parties dirigées se terminant dans des faces d'extrémité de transfert de lumière, et ledit dispositif comportant des moyens de connexion pour fixer des fibres optiques supplémentaires respectives selon une relation de transfert de lumière avec lesdites faces d'extrémité, de sorte que, par exemple, une fiche de connexion puisse être réalisée par connexion d'une extrémité dudit adaptateur à l'extrémité d'un câble de fibres.

13. Dispositif d'acheminement selon l'une quelconque des revendications 1 à 11, caractérisé de plus en ce qu'il est formé en tant que partie solidaire d'une fiche de connexion ou analogue, ladite fibre optique s'étendant intégralement vers l'extérieur à partir de ladite première partie dirigée dans une enveloppe souple, et ladite seconde partie dirigée se terminant dans une face d'extrémité de transfert de lumière adaptée pour être reliée à une autre fibre optique dans une relation de transfert de lumière.

14. Dispositif d'acheminement selon l'une quelconque des revendications 1 à 11, caractérisé de plus en ce qu'il est formé dans le milieu d'un câble optique souple, ladite fibre optique s'étendant intégralement vers l'extérieur à partir de chacune desdites parties dirigées, dans une enveloppe souple.

15. Dispositif d'acheminement comportant un ruban optique de fibres constitué de plusieurs fibres optiques, chacune desdites fibres constituant un dispositif d'acheminement selon l'une quelconque des revendications 1 à 11, un élément extérieur étant commun à toutes lesdites fibres.

16. Ensemble de connexion comportant un panneau de connexion présentant une multiplicité de faces d'extrémité de trajets optiques destinées à être reliées à des fibres optiques, et une série correspondante de fiches de connexion, caractérisé en ce que chacune des fiches de connexion comporte un dispositif d'acheminement selon la revendication 12 ou 13, les fiches de connexion étant reliées audit panneau de connexion, lesdites faces d'extrémité étant dans une relation de transfert de lumière avec les trajets optiques dudit panneau, et le changement de direction fourni par lesdits dispositifs d'acheminement permettant auxdites fiches de connexion de s'étendre dans des relations latérales voulues, adaptées, par rapport audit panneau de connexion.

17. Ensemble de liaison mobile pour une fibre optique comportant : un premier élément de boîtier, un second élément de boîtier monté pour se déplacer par rapport audit premier élément de boîtier, lesdits premier et second éléments de boîtier étant mobiles l'un par rapport à l'autre sur une amplitude limitée, et une courte longueur de fibre optique à faible perte ayant des première et seconde parties et une partie de fibre médiane, lesdites première et seconde parties étant fixées respectivement par rapport auxdits premier et second éléments de boîtier, ladite partie de fibre médiane ayant un diamètre en coupe transversale qui est nettement réduit par comparaison aux diamètres en coupe transversale desdites première et seconde parties, ledit ensemble de liaison étant agencé de sorte qu'en utilisation ladite partie de fibre médiane peut être soumise à une charge du fait du mouvement relatif entre ledit premier élément de boîtier et ledit second élément de boîtier, ladite charge comportant au moins une charge parmi une charge de courbure et une charge de torsion, et ledit diamètre réduit en coupe transversale réduit la probabilité d'une rupture mécanique avec le temps après une charge répétée, sans introduire de perte optique importante.

18. Liaison glissante pour fibre optique, comportant: un premier élément de boîtier, un second élément de boîtier monté pour se déplacer en translation par rapport audit premier élément de boîtier, et une courte longueur de fibre optique à faible perte ayant des première et seconde parties et une partie de fibre médiane, lesdites première et seconde parties étant fixées respectivement sur lesdits premier et second éléments de boîtier, ladite partie de fibre médiane ayant un diamètre en coupe transversale qui est nettement réduit par comparaison aux diamètres en coupe transversale desdites première et seconde parties, ladite partie de fibre médiane étant incurvée sous la forme d'une bobine hélicoïdale de sorte qu'en utilisation lorsque lesdits premier et second éléments de boîtier se déplacent l'un vers l'autre ladite bobine hélicoïdale est comprimée et lorsque, en utilisation, lesdits éléments s'éloignent l'un de l'autre ladite bobine hélicoïdale est dilatée, et ledit diamètre réduit en coupe transversale réduit la probabilité d'une rupture mécanique avec le temps après des compressions et des dilatations répétées, sans introduire de perte optique importante.

19. Liaison rotative pour fibre optique, comportant: un premier élément de boîtier, un second élément de boîtier, et une courte longueur de fibre optique à faible perte ayant une première et une seconde partie et une partie de fibre médiane, lesdites première et seconde parties étant fixées respectivement sur lesdits premier et second éléments de boîtier, ladite partie de fibre médiane ayant un diamètre en coupe transversale qui est nettement réduit par comparaison aux diamètres en coupe transversale desdites première et seconde parties, dans lequel, en utilisation, ladite partie de fibre médiane peut être tordue par mise en rotation relative entre lesdits premier et second éléments de boîtier autour d'un axe défini par ladite partie de fibre médiane, et ledit diamètre réduit en coupe transversale réduit la probabilité d'une rupture mécanique avec le temps après des mises en rotation relatives répétées, sans introduire de perte optique importante.

20. Dispositif formant coupleur optique de fibres comportant une pluralité de fibres optiques couplées, dont une ou plusieurs sont munies d'un dispositif d'acheminement selon la revendication 1.

21. Emballage comportant un premier et un second dispositif électro-optique, au moins un dispositif d'acheminement selon la revendication 2, facultativement un ou plusieurs dispositifs optiques à fibre, et facultativement un ou plusieurs composants optiques intégrés, dont l'un quelconque et tous les dispositifs et composants sont montés sur un support rigide et reliés mutuellement en utilisant un ou plusieurs desdits dispositifs d'acheminement, le premier dispositif électro-optique étant un émetteur de lumière, et le second dispositif électro-optique étant un détecteur de lumière, et ledit ou lesdits composants optiques intégrés comportant un ou des multiplexeurs optiques, un ou des modulateurs optiques, un ou des déphaseurs optiques, un ou des coupleurs optiques à fibre fondue, et/ou une ou des commandes de polarisation optique.
